# EUROPEAN PATENT SPECIFICATION

(11) **EP 3 195 554 B1**
(45) Date of publication and mention of the grant of the patent: **26.12.2018**
(21) Application number: 15762991.6
(22) Date of filing: 11.09.2015
(51) Int. Cl.: H04L 29/06, H04L 12/26, H04L 12/46

(54) **METHOD FOR COMMUNICATING IN A NETWORK COMPRISING A VIRTUAL NETWORK, AND A COMMUNICATION NODE COMPRISING A VIRTUAL NETWORK ENTITY**
VERFAHREN ZUR KOMMUNIKATION IN EINEM NETZWERK MIT EINEM VIRTUELLEN NETZWERK UND EINEM KOMMUNIKATIONSKNOTEN MIT EINER VIRTUELLEN NETZWERKEINHEIT
PROCÉDÉ DE COMMUNICATION DANS UN RÉSEAU COMPRENANT UN RÉSEAU VIRTUEL ET UN NOEUD DE COMMUNICATION COMPRENANT UNE ENTITÉ DE RÉSEAU VIRTUEL

(30) Priority: 15.09.2014 EP 14184843
(43) Date of publication of application: 26.07.2017
(73) Proprietor: Philips Lighting Holding B.V., 5656 AE Eindhoven (NL)
(72) Inventor: VIDAL MECA, Francisco, 5656 AE Eindhoven (NL); GARCIA MORCHON, Oscar, 5656 AE Eindhoven (NL); SHARMA, Sahil, 5656 AE Eindhoven (NL); DIJK, Esko Olavi, 5656 AE Eindhoven (NL); AOUN, Marc, 5656 AE Einhoven (NL); CHATTERJEA, Supriyo, 5656 AE Eindhoven (NL); KURVERS, Markus Jozef Maria, 5656 AE Eindhoven (NL)
(74) Representative: Verweij, Petronella Daniëlle
(86) International application number: PCT/EP2015/070848
(87) International publication number: WO 2016/041864

(56) References cited:
- US-A1- 2005 175 184
- US-B1- 6 307 837
- ESTÉVEZ F J ET AL: "DARP: dynamic and adaptive radio protocol for wireless sensor networks", ELECTRONICS LETTERS, IEE STEVENAGE, GB, vol. 50, no. 2, 16 January 2014 (2014-01-16), pages 122-123, XP006046640, ISSN: 0013-5194, DOI: 10.1049/EL.2013.2488

## Description

### FIELD OF THE INVENTION

The present invention relates to a method for communicating in a network, in particular in a wireless network.

This invention is, for example, relevant for outdoor lighting networks, where a plurality of networks coexists and share the same medium and protocols.

### BACKGROUND OF THE INVENTION

In networks, in particular outdoor lighting networks, a plurality of networks dedicated for different services may coexist.

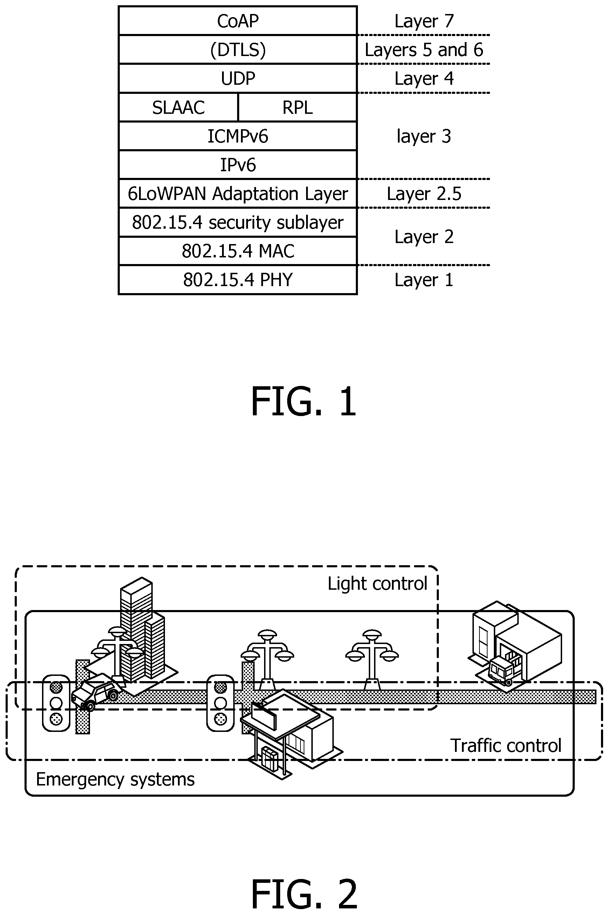

It is considered here constrained networks for example using the 6LoWPAN protocol stack as depicted in Figure 1. In this exemplary protocol stack described in accordance with the OSI model, Layer 1, the Physical Layer is based on 802.15.4 PHY, Layer 2, the data layer, comprises 802.15.4 MAC and 802.15.4 security sublayer. The routing is in this example carried out at layer 3 with the RPL or MPL protocols.

This kind of networks can be on large-scale deployments, i.e. city-wide Internet of Things (loT) deployment, used in a smart city context, or in smart buildings. The smart city under study, depicted in Figure 2, offers multiple services such as light control, emergency systems, traffic control, waste management or environmental data collection.

These networks must be designed so that different applications can safely reuse the infrastructure for different purposes, that is, without affecting normal network operation or its security. Traditionally, different organizations deploy, operate, and maintain their networks to offer certain services, leading to multiple 6LoWPANs which overlap, share the physical space but, are completely isolated from each-other for management and security reasons as in Figure 2.

However, it would be to interesting to design these networks to enable multi-tenancy city-wide or smart building networks, on which different applications can share the network infrastructure. The re-use of existing networks for different applications would allow for a common mesh network, where communication can be done using a common infrastructure but with different usages. This can lead to a better use of existing resources, faster deployment of new applications and greater network flexibility. For example, network deployment, maintenance costs and time to market of new applications could be leveraged with a reduction of physical 6LoWPANs and a purpose diversification of already existing physical networks, i.e., the roll-out of smart meters can be done faster by reusing an existing city-wide network, which would accommodate new devices, but performing different applications and functions. In this example city-wide networks are considered, however similar solutions can also be applied to other networks such as BACS, Neighborhood Area Networks (NANs) or HANs. Furthermore, there is also a need to provide prevention, detection or avoidance of threats.

In the example of Figure 2, applications with different security profiles or from different vendors, coexist in the network and can potentially interfere with each others performance. Moreover, there is a need to improve the security of the various components of the networks, and limit the range of an attack by limiting its spreading in the network to the various applications.

US 6 307 837 discloses a method to forward packets between terminals within different virtual networks by correlating network identifiers, keys and addresses.

### SUMMARY OF THE INVENTION

It is an object of the invention to propose a method for communicating in a network which enables the reuse of the infrastructure of different applications of a network.

It is another object of the present invention to propose a method which enables to isolate different application-network without involving great complexity or computation power.

To this end, the above mentioned objectives are solved by a method as defined in claim 1 and a communication node as defined in claim 5.

As a consequence, it is provided the means to share and reuse an existing network, e.g., 6LoWPAN, by sharing the physical resources between different logical domains (e.g. application domains) which operate independently. This would allow for different network usages, while ensuring its correct behavior with isolated network divisions in an loT enabled smart city. These divisions can overlap within the shared network and have to allow not only for data communication independence, but also for independent network mechanisms such as routing and addressing. These logical domains would allow for isolating network failures, restricting access to specific uses of the network and protecting specific network traffic and infrastructure. This approach can be applied to a number of networks including Wi-Fi mesh networks or the next generation of cellular networks with device-to-device communication capabilities.

In order to achieve this, it is proposed in the various embodiments of the invention to use in the network at least one virtual network to which some of the nodes of the network belongs, for example depending on which applications these nodes relate to. Each communication node of a considered virtual network can identify whether a data packet belongs to its virtual network based on at least one of
- a cryptographic key used for the data packet;
- a cryptographic key identifier present in the first data packet; or
- a Personal Area Network identifier present in the first data packet.
Alternatively, in case the data packet is an outgoing data packet, for example generated by the communication node itself, the virtual network is identified based on a sender address and/or a destination address. These addresses can be IP addresses, for example IPv6 addresses. Embodiments of the invention are based on the general idea to simplify the way virtual networks are isolated one from another and, in some examples of the invention, to bring this isolation at the lowest possible layer of the protocol stack. This results in a low complexity for the nodes implementing the invention. Moreover, the use of the cryptographic key (or its identifier) or of PAN identifier enables a backwards compatibility with other nodes.

In accordance with another aspect of the invention, it is proposed a record medium storing a computer program, enabling to carry out the method of the first aspect of the invention when executed on a computer.

These and other aspects of the invention will be apparent from and will be elucidated with reference to the embodiments described hereinafter.

### BRIEF DESCRIPTION OF THE DRAWINGS

The present invention will now be described in more detail, by way of example, with reference to the accompanying drawings, wherein:
- Fig. 1, already described, represents an illustrative conventional protocol stack.
- Fig. 2 is a network in which the invention is implemented.
- Fig. 3 represents a protocol stack in accordance with an embodiment of the invention.
- Fig. 4 is a block diagram representing a network in accordance with an embodiment of the invention.
- Fig. 5 is a block diagram representing the various phases of a commissioning method in a network in accordance with an embodiment of the invention.
- Fig. 6 is a flowchart representing a method of receiving incoming data packets in accordance with an embodiment of the invention.
- Fig. 7 and 8 are flowcharts representing methods of transmitting outgoing data packets in accordance with embodiments of the invention.
- Fig. 9 is a flowchart representing a method for controlling the bandwidth in a network in accordance with an embodiment of the invention.

### DETAILED DESCRIPTION OF THE INVENTION

The present invention relates to a network comprising a plurality of communication nodes. In an example of the invention, this network comprises various applications linked to different services. Thanks to the embodiments of the invention described below, the different services can reuse the infrastructure while maintaining a logical isolation between them.

The embodiments of the invention that will now be described as an illustration are aiming at various following goals.

A first aspect these embodiments are aiming at is the security of the network. As an example, the IEEE 802.15.4 security sub-layer provides basic network security for other communication protocols. It is aimed at the protection from a wide range of network threats and situations that can lead the network to fail or provide a defective service, impeding its normal operation. In addition to network security as provided by 6LoWPAN network security mechanisms that ensure network-wide data confidentiality, authentication and integrity, it is aimed at providing enhanced network security and availability, not only during normal operation but, also under different attacks, such as routing attacks or Denial of Service (DoS) attacks. Furthermore, new vector attacks and effects of existing threats have to be minimized.

Besides, some of these embodiments are aiming to a second aspect which is Quality of Service (QoS). In accordance with the idea of having virtual networks, the different network divisions share the same physical medium and constrained devices, hence the misuse or overuse of such resources in one of them can affect shared resources and ultimately the QoS of the whole network. Thanks to some of the embodiments that will be described hereafter, network congestion or abnormal activity should not have any effect in other divisions, hence keeping their independence. Bandwidth control mechanisms can improve network security, avoiding the misuse and overuse of shared resources and confining the network effects in a specific a part of the network. Besides, the operation of the network can be enhanced by issuing rules to efficiently use device's and network's resources, adapting the available bandwidth for different divisions.

Another aspect which is ensured by the embodiments of the invention is the interoperability. Ideally, a device that is not aware of the new functionalities, should at least, be able to achieve the standard features and work safely while devices in accordance with the embodiments of the invention make use of the new functionalities.

Eventually, the proposed embodiments are efficient in operation, and limit the additional amount of overhead and complexity. Hence, small-network overhead is a very desirable feature. Furthermore, the loT is formed by devices with very heterogeneous resources, the embodiments allow even highly constrained devices to participate according to those limited processing and memory resources. Memory restrictions apply for both the code-size (ROM) and the data-size (RAM).

The present invention is more especially dedicated to a method of a communication node communicating in a network. Such a network can be a 6LoWPAN network comprising a plurality of nodes. In accordance with the various embodiments of the invention, the communication nodes of the network belong to various virtual networks. For a communication node to identify whether a first data packet belongs to a considered virtual network, the identification can be made at the lowest possible level, to reduce the complexity of implementation. This identification can be based on one and/or the other of the following, as will be explained in more details in the embodiments of the invention:
- a cryptographic key used for the data packet;
- a cryptographic key identifier present in the first data packet;
- a Personal Area Network identifier present in the first data packet; or
- the combination of a cryptographic key and a sender network address used for the first data packet.

In accordance with a first embodiment of the invention, the network comprises virtual network, hereafter referred to as VNets. This description will be based on 6LoWPANs, however could be adapted on other kinds of network protocols such as Wi-Fi-mesh or the next generation of cellular networks with device-to-device communication capabilities..

A VNet is defined as a logical partition of a 6LoWPAN network, such that the communication within each logical partition (network divisions) is independent and isolated from others. Furthermore, communication between different VNets can only be done through specific routers that can communication to several VNets. Each VNet resides within a main 6LoWPAN network, and can be tailored for specific usages or services in a smart city. VNets may not be disjoint, but they can share parts of the network.

VNETs in 6LoWPANs would enable isolated logical networks sharing the same deployment and physical devices in scenarios like the one described in the preamble of the description. This would allow network operators to better use resources of existing deployments by reusing powerful devices, isolating critical parts of the network, sub-renting existing deployments without affecting the QoS or even extending network coverage. For example, some network resources, such as 6LBRs, can be better exploited if they can give support to multiple services. Network deployments are expensive, hence they are a valuable asset that can be optimized if its usage is not restricted to a single purpose or company. By allowing for multiple VNets using the same physical devices, we enable better usage of existing deployments. Possible scenarios are not restricted to smart cities, but can include other network deployments such as BACSs or HANs.

A solution based on existing standard protocols is very advantageous as it would enable the use of a high number of communication nodes and ensures the interoperability. To realize this vision, it is considered in an embodiment of the invention to isolate different VNets in the lowest level as possible. This enables different application domains and isolates them in a fundamental level.

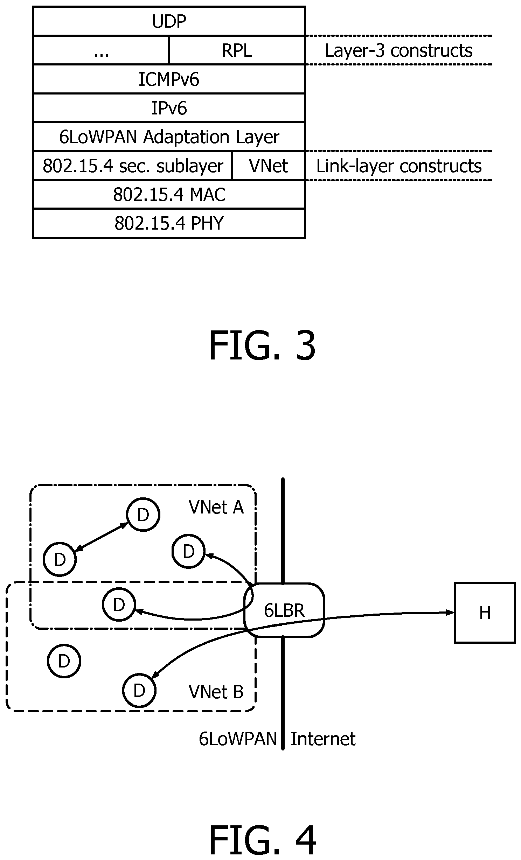

The protocol stack of this example is represented on Figure 3. IEEE 802.15.4 security mechanisms protect the link-layer and upper layers of the 6LoWPAN. They can potentially mitigate the effects and escalation of potential threats by isolating the specific VNet from others in the same 6LoWPAN. Additionally, layer-3 mechanisms are used to provide concurrent and independent routing structures. Different RPL global instances are bounded to their specific VNet in order to allow for concurrent routing structures within the constrained network and ultimately provide routing independence to each VNet. RPL is used to create the routing tables needed by IPv6 to route messages within a VNet; either (i) from devices within the VNet itself, or through the appropriate RPL root device from (ii) outside the VNet, or (iii) outside the 6LoWPAN. Hence, logical isolated domains are enabled within the same physical 6LoWPAN with a combination of link-layer security and RPL mechanisms orquestrated by means of a VNET policy as it is depicted in Figure 3.

With regard to link-layer security mechanisms, VNet are provided with cryptographic independence, which involves providing different security mechanisms (e.g. different keying materials) for each VNet in the network. This can improve VNet security, as confidentiality, authentication and integrity checks are VNet-specific and each VNet's traffic would also be cryptographically isolated. Furthermore, device-compromise effects can be restricted only to certain VNets. Finally, it can improve operation effciency, since traffic can be checked to belong to a specific VNet only by ensuring the correctness of a cryptographic check, allowing for efficient VNet-specific policy checks. For instance, a VNet-wide key would allow for Message Integrity Code (MIC) checks to ensure that the sender is allowed into the VNet. Alternatively, a VNet-specific pair-wise key scheme allows devices to check for the previous condition and additionally authenticate communicating devices. A pair-wise key scheme can also be applied to the network itself allowing for secure links between pairs of devices. The usage of pair-wise keys provides higher resilience, although it involves higher resource needs.

Besides, cryptographic primitives can be used with the highest degree of security provided by the IEEE 802.15.4-2006 specification, that is AES-128 in CCM mode to provide confidentiality and data authenticity. It is considered both network-wide keys bounded to each VNet or pair-wise keys. While the latter provided improved security based on hop-by-hop frame protection, they also have higher key management complexity, communication overhead and memory footprint than network-wide keys. Other networks can use other types of encryption and authentication algorithms different than AES in CCM mode.

In the following, VNet-wide keys are considered in order to provide cryptographic means to check correctness of VNet membership and protect VNet traffic on a per device basis. This enables VNets as link-layer constructs; devices are only able to successfully send and receive frames for which they have the appropriate key materials. Furthermore, multiple concurrent routing structures can be bounded to each VNet. Additionally, layer-3 constructs are directly related to link-layer (layer-2) constructs as a mean to guarantee VNet independent operation.

In the case that pair-wise keys are used at L2 and that these pair-wise keys are independent of the VNET, then the exchanged messages at L2 need to include an identifier linked to the VNET. This identifiers allows the node processing the incoming message to perform source verification of the incoming message, and then verify whether the sender of the message is allowed to send messages in the given VNET by checking a VNET policy that maps the neighbour nodes to the VNETs in which they are located. If a VNET key or pair-wise VNET keys are used, then this policy is implicit to the cryptographic verification.

The combination of link-layer Network-wide keys (in this case as VNet-wide keys) and layer-3 independent routing mechanisms is expected to fulfill all required functionalities except QoS, which can be solved with specific link-layer or layer-3 policies.

Figure 4 shows a network operating in accordance with this embodiment of the invention. On this figure 4, different VNets (VNet A and Vnet B) are coexisting in a 6LoWPAN network. Devices D can belong to multiple VNets and communicate between them or with Internet Hosts H via a router, here a 6LoWPAN Border Router (6LBR).

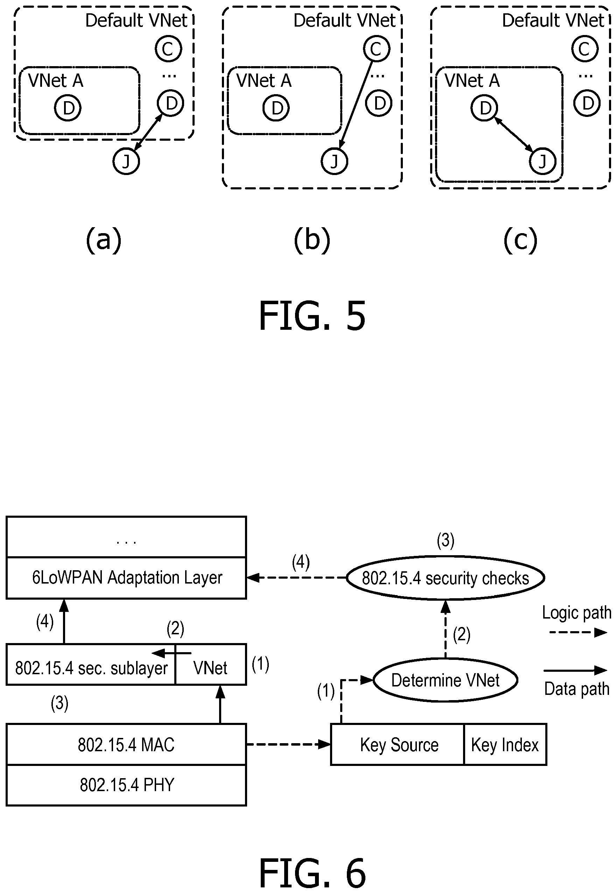

To create such a network, it is required to carry out the commissioning of the communication nodes. This commissioning is done in accordance with several phases illustrated on Figure 5. The usage of link-layer and routing mechanisms enables VNets in 6LoWPANs during its commissioning and operational phases.

A VNet-enabled network, is assumed to have an open but controlled default VNet used for network commissioning as depicted in Fig. 5(a), which is accessible to all devices. This VNet is only used to provide local IP connectivity to joining devices in order to communicate with the network controller, assumed to be the RPL root for the appropriate instance. The controller can then create a secure association and transmit the appropriate security credentials to operate in additional VNets as depicted in Figure 5(b). The latter can be done using the DTLS protocol to mutually authenticate, which gives security assurance of safe E2E VNet policy distribution through a secure channel. After that, the joining device can successfully join the appropriate operational VNet as shown in Fig. 5(c).

In some situations, only some nodes in the network will have the capability of supporting multiple VNETs (part of the overall networking infrastructure) while other nodes (e.g., end nodes of a given application vertical, e.g., smart energy) will just want to reuse the networking infrastructure. In this case, the nodes of the given application vertical will proceed with a network access procedure based on a protocol such as PAN/EAP or DTLS with relay capability that allow contacting the network operator before actual network joining. The network operator will then verify the identity of the joining device and assign the joining device the corresponding network parameters of the assigned VNET. The network operator might also create the VNET in the infrastructure nodes so that the joining node of the given application vertical can communicate over its own VNET.

In the following examples, it will be detailed how to provide network segmentation and isolation for concurrent VNets, VNet routing and addressing mechanisms and how to enable a distributed bandwidth control mechanism during the device operational phase. The simplified life-cycle does not directly cope with devices leaving a VNet, but assumes a general VNet key update excluding the appropriate devices. This is achievable using the control VNet and E2E security associations with the controller (network operator) but it can be further integrated in other life-cycle alternatives that use better group key management mechanisms and efficient parameter distribution.

In order to determine at link-layer to which VNet a frame belongs, it can be made use of several mechanisms. The first option considered, is to use an internal tagging mechanism. This mechanism would add specific fields on the IEEE 802.15.4 frame. However, the main drawback of this approach is that it requires the specification of new non-standard fields that will not be recognized by devices without explicit VNet support. Thus this approach does not achieve our objective of interoperability. Given that devices in a mesh network can act also as routers, it would be required that all possible routers support the new functionality. The options discussed in the following are those that reuse existing standard features but extend their functionality when more than one VNet is to be recognized by a device. The advantage of such approaches is that, devices which strictly use standard features are able to be part of one of the VNets without any logic change. In contrast, devices that aim to be part of more than one VNet at the same time, need to adapt its protocol logic in order to manage concurrent VNets. We focus on the suitability of two fields present in the IEEE 802.15.4 standard.

The first one is the PAN-ID, which is a unique number that each independent Personal Area Network (PAN) selects. This PAN-ID allows communicating between devices within a network using short addresses, and enables transmissions between devices across independent networks.

The second field considered is the Key Identifier. It is a variable length sub-field of the Auxiliary Security Header that identifies the key used for cryptographic protection of frames. It allows for unique identification of different key originators and the different key indexes to support different concurrent key materials in the network. As opposed to the previous method, all VNets share the same PAN-ID, specified as part of the same 6LoWPAN. The different VNets are distinguished by the Key Identifier of their frames. Hence, the device can listen only a specific 6LoWPAN and ignore the rest of the frames. Then, the device can differentiate between different VNets depending on the Key Identifier used in the frame, and use the appropriate key used to verify the frame if available. The usage of key identifiers adds some extra bits on a per-frame basis.

In terms of key management and memory usage, both approaches have similar requirements, given that in any case, devices with link-layer isolation requirements need to have different keys for each VNet. The approach which uses different PAN identifiers has more filtering/channel-selection complexity, while the approach which uses the Key Identifiers has slightly higher network overhead. Furthermore, the latter operates regardless of the PAN-ID. Its simplicity comes at the price of adding some per frame overhead caused by the key identifier field; but it encapsulates the VNet specification to the MAC layer (layer-2) without any changes to the physical layer (layer-1). This approach also provides a more generic solution to distinguish VNets, which can provide a higher flexibility while adding, merging or deleting VNets in large deployments.

Preferably, VNets thus differ on the Key Identifiers but can use the same PAN-ID. This option is advantageous because of its simplicity and because it follows the design concept of multiple virtual partitions of a single 6LoWPAN, that is, logical sub-divisions of a network with the same PAN-ID. IEEE 802.15.4 network-wide keys are used as VNet-wide keys and their key identifiers specify the VNet to which the key belongs and its version. The key source is thus used as a VNet identifier.

In IEEE 802.15.4, the Key Identifier is a sub-field that specified the frame used to protect a specific frame. It is divided into a key source and key index. The key source can be used to specify the VNet to which the key belongs to, and the key index as a key version number. This allows for the coexistence of multiple VNets in a single network (denoted by different key sources) and for key refreshing in each VNet independently, done by a key index upgrade (i.e. key version number). Devices with key materials from one or more VNets, can recognize different key sources and are able to securely process such messages using the appropriate key materials1. On the contrary, messages from devices that do not have the correct key material are dropped by the next-hop neighbor given that the security checks fail. In the case of a device which does not support VNets, it can still be part of a single VNet. This is possible as long as it supports the key identifier mode from the IEEE standard. The device is able to process the protected messages for which the appropriate keying material is known, which makes this approach suitable for scenarios on which some devices might not be able to support VNet logic. For example very constrained or old devices. If a dedicated VNET is used for commissioning, then during network commissioning, devices supporting a single VNet can still communicate with the controller, but are not able to do it once they join another VNet. In contrast, VNet-enable devices can still make use of the default VNet in order to allow future joining devices to reach the network controller. If a network access process in which PANA/EAP or another application level protocol is used, then the device can always reach the controller at application layer.

In various examples of the invention, it can be assumed a Key Identifier Mode value of 2, since it allows for multiple VNets (up to 232) defined by the Key Source field (4 Bytes) and multiple key indexes in the Key Index field (1 Byte). The Key Identifier Mode 3 is less considered because of its higher size and, therefore, per-packet overhead, even though it can be used if more than 232 VNets are to be used concurrently in the same network. The usage of Mode 1 does not include a Key Source field, but gets the appropriate key from the Key Index with a default key source instead. It would be possible to use the key indexes to specify the frame's VNet. Nevertheless, this approach is less preferred for VNets, since it is important to keep the ability to upgrade keys in case they are compromised. This is typically done using key indexes for different key versions in the network. Devices that are not aware of the VNet logic can misinterpret smaller key indexes as old keys used in the network when seeing traffic from more than one VNet.

The VNet logic to correctly identify and check incoming frames as part of a specific VNet is depicted in Figure 6. Upon receiving an IEEE 802.15.4 frame, the VNet logic uses the key source sub-field (1). The key source acts as a VNet identifier and determines to which VNet the frame belongs. If the VNet is known by the receiving device, the appropriate key materials for such VNet are loaded on the IEEE 802.15.4 security sub-layer (2). Then, the frame is checked as instructed by the IEEE 802.15.4 standard security fields (3); depending on the security fields, the frame can be protected differently, e.g., the default VNet is not even protected. On success, the frame is then passed to the upper layer protocols for further processing if needed (4). If the checks failed in (3) or no suitable VNet was found in (1), the frame is assumed to be invalid and dropped. Hence, different VNets are distinguished at link-layer and their frames isolated and protected using link-layer cryptographic mechanisms.

Devices with access to one or multiple VNets are able to correctly send and receive secure link-layer messages, they protect them and ensure their validity. In the following, we describe the relation between VNets as link-layer constructs and routing constricts in layer 3 to enable VNets. In order to minimize cross-layer dependencies, this design has as a priority to use the protocol information available only from the immediately adjacent layers. Ideally, upper-layer protocols should be agnostic of what happens at link-layer and vice-versa. The main reason is to respect current standard definition and protocol usage, furthermore it leads to easier application design and protocol adoption.

Given that VNet isolation is done in link-layer, different VNets have to be seen by upper layers as independent networks each of them with their own routing structure. This is so because upper layers are not going to receive any messages which are intended for other VNets unless the device also has access to them. Even in devices with access to more than one VNet, the individual VNet behavior should be kept mutually independent in order to maintain the isolation and network segmentation.

Routing mechanisms have to be aware of different VNets and their independence. Furthermore, upper layer protocols need a mechanism to choose the VNet to which a message is going to be sent to. Hence, VNets should act independently not only at link-layer, but also at the upper-layer logic.

It is thus proposed a binding between link-layer constructs (VNets), for example at layer 2, and layer 3 constructs, i.e. IPv6 and its corresponding mechanisms. RPL global instances allow for different routing structures in the same network. Each VNet can then have its correspondent RPL instance that is to be used to route messages in such VNet. Similar approaches can be created based on other routing protocols such as MPL, etc.

The RPL specification does not elaborate on how to use RPL instances concurrently. This solution allows for, not only link-layer isolation but for, different routing structures and address spaces in each VNet. RPL routing mechanisms and structures can be used to distribute network configuration parameters. For example, DIO messages can carry the PIO. The PIO is used to distribute the prefix in use inside the DODAG for IPv6 Stateless Address Autoconfiguration (SLAAC).

This permits to automatically assign IPv6 addresses to devices that join a VNet; but other procedures for IP address assignment and network configuration such as Neighbor Discovery Optimization for 6LoWPANs are also possible. Hence, a host outside the 6LoWPAN can communicate with a device in different VNets. Devices have multiple IPv6 global addresses with a different prefix that determines the VNet (and RPL instance).

A communication node can have multiple RPL instances that are used to manage different routing structures within the mesh network. Each of them is associated to their correspondent IPv6 addresses on their own sub-networks inside the 6LoWPAN. That way, upper-layer protocols are able to use different IPv6 addresses depending on the target VNet of the messages and those messages use different routing structures (RPL instances). VNet policies include the associated RPL instance, so that the link-layer is bounded to its respective layer-3 structures.

Hence, when an outgoing message reaches the link-layer, specific VNet logic is needed to identify the appropriate VNet to be used for outgoing traffic. As referred before, an upper-layer protocol that wishes to send data through a specific VNet has to choose the appropriate source IPv6 address to use. Addresses used by upper-layer protocols, or devices outside the 6LoWPAN, are IPv6 global addresses, and their corresponding RPL instance (and VNet) can be selected matching the IPv6 prefix. Then, the outgoing frame arrives to the link-layer where it is protected with the appropriate keying materials and sent to the next hop.

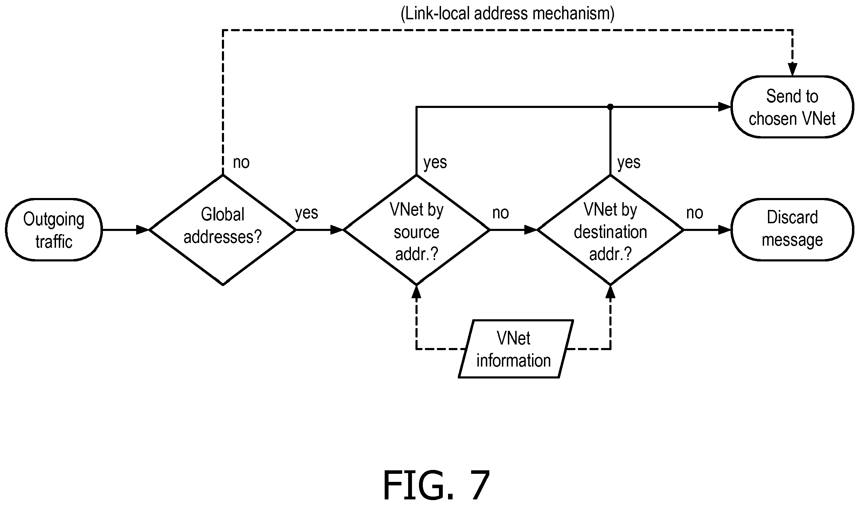

As shown on Figure 7, when a device sends a message (outgoing traffic) using IPv6 global addresses and VNets, three possible types of traffic are identified. From the point of view of a device, the types are: Generated, Routed and Inter-VNet traffic. It is worth noting that traffic which is to be routed outside the 6LoWPAN in the next-hop (or outside a VNet) is not considered, since next-hop messages are not protected by the IEEE 802.15.4 link-layer. If those messages need to be secured, other solutions for regular Internet traffic can be considered, such as IPsec or DTLS.

Generated traffic is sent directly from the communication node itself. This traffic has been generated in the communication node and has for example an IPv6 global address that belongs to the communication node as source address.

Routed traffic originates in some other host and uses the considered device to reach its final destination, e.g. device #1 sends a message through device #2. The message is received by device #2 and checked on link-level. Then, the message is processed by the IPv6 to determine the next-hop neighbor, based on the routing tables provided by RPL. In this case, the message was processed successfully when it was received by the VNet layer, hence the preferred option is to assume that the VNet associated with its source address is known. If the assumption is correct, the device is able to find an appropriate VNet based only in the frame's source address. This is true for traffic that was originated inside the source-address' VNet. If that is not possible, given that the message was correctly processed by the VNet layer on reception, the alternative is to locate the VNet associated with the destination address. This happens with traffic that is routed from outside the VNet to some device within the VNet, for example for traffic from the Internet.

The last traffic type is the inter-VNet traffic, which occurs in very specific devices, i.e. router devices which are the RPL roots of more than one VNet. These devices can receive traffic that is to be routed from one VNet to another. For instance, a device can route traffic from VNet #1 to VNet #2 and vice-versa. The communication node is capable to determine the appropriate VNet using the destination address.

In order to maintain the VNet routing isolation, normal devices are not allowed to forward messages to different VNets other than the one on which the message was received. Hence, this kind of traffic has to be sent to the VNet determined by the source address of the message if possible and otherwise to the destination address, which in fact is like treating this kind of traffic as routed traffic.

As explained before, a device which participates in different VNets can have multiple IPv6 addresses, each of them routed through a different RPL instance and isolated within a certain VNet. The mechanism considered to assign IPv6 addresses to each device on different VNets is assumed to be SLAAC for its simplicity and easy combination with RPL mechanisms. Therefore, a device which receives DIO messages can learn the Directed Acyclic Graph (DAG) prefix used in that instance (IPv6 prefix) and assign itself a unique IPv6 address for such VNet. Other methods are possible. For instance, a device using PANA/EAP or DTLS to contact the network operator and join the network could receive its IP address directly at application layer together with the rest of VNET parameters.

The IPv6 address structure depends on the network operator, here we exemplify a solution for which IPv6 sub-networks are bounded to specific VNets so that is easier to distinguish VNets on IP level. In an example,a 6LoWPAN network can communicate with the Internet using a border router bridging the network with Internet, e.g. a 6LoWPAN Border Router (6LBR). The 6LBR gets assigned (e.g. by the ISP) an IPv6 address in the /48 range from which it can allocate many sub-nets. The network operator has defined a default VNet (VNet A) which covers the whole 6LoWPAN and has been bounded to an RPL instance advertising the IPv6 prefix ending with an 'A'. For example, this VNet can be used as a network management and configuration VNet from which the network operator has full control of the network; or as an open VNet used for auto-commissioning.

Furthermore, two more VNets can be configured to advertise prefixes ending with a 'B' and a 'C', VNets B and C respectively. Both VNet are sub-rented to third party companies which can then reuse certain parts of the network. In this setup, all VNets share the same device acting as RPL root of multiple RPL instances. This can simplify communication between different VNets.

In the same example, the IPv6 addresses of three different devices are considered as an illustrative example of VNet IPv6 addressing. It is assumed that devices 1, 2, and 3 have link-local addresses ending with a 1, 2 and 3 respectively in order to simplify the examples. Device 1 belongs to VNets A and B, hence is able to receive DIO messages that contain prefix information for those VNets and consequently forms part of both RPL instances after the initial network setup process. Once the network is set up, device 1 has configured two different IPv6 addresses based on the different VNet prefixes, namely 2001:0db8:0000:000A::1 and 2001:0db8:0000:000B::1 for VNet A and B respectively. Another device communicating with it, can address it using either of them and messages is routed and isolated within the appropriate VNet.

Analogously, device 2 is reachable in all of the VNets using one of its 3 IPv6 addresses and device 3 will be reachable in VNet A and C. The previous addresses are configured using SLAAC based on the network prefix advertised and the link-local address.

Even though it has been focused on per-device restrictions, it is worth noting that in this example further application-wise restrictions could be applied on a higher level, e.g. OS level. For example, device 2 could hide the existence of the IP in the range of VNet A to applications that are not from the network-operator or do not have the correct OS permissions.

Nevertheless, the traffic considered so far does not include the one generated by certain IPv6 sublayer operations such as network setup. The IPv6 addresses used for such mechanisms are link-local addresses that do not share the IPv6 prefix with any VNet. For instance, this happens with mechanisms such as SLAAC (which is a component of the Neighbor Discovery Protocol) or other IPv6-based protocols like RPL or DHCPv6. It is worth noting that link-local addresses do not provide meaningful information to be used for VNet identification, hence another mechanism using extra information from upper-layer is needed.

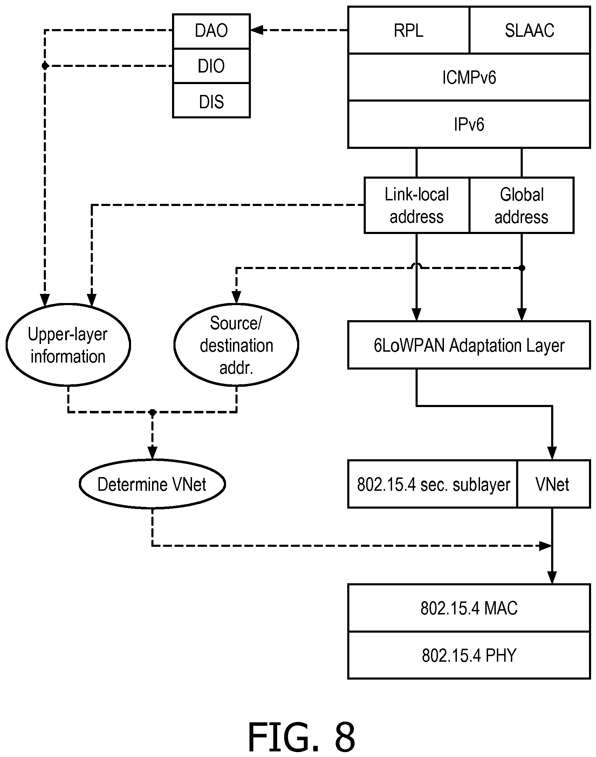

Traffic from different VNets are indistinguishable by their link-local addresses. In order to provide VNet identification for link-local traffic, upper-layer information needs to be used. The typical source of link-local traffic in 6LoWPAN networks is traffic generated by IPv6 sub-layers in charge of providing global IP addresses to network devices. RPL traffic is to be used to set up routing structures as well as to distribute prefix information to perform Stateless Address Autoconfiguration (SLAAC) operations. The identification process is depicted in Figure 8 and can be extended to other protocols that make usage of link-local addresses as well (e.g. Optimized Neighbor Discovery for 6LoWPANs).

RPL traffic consists of three kinds of messages: DODAG Information Solicitation (DIS), Destination Advertisement Object (DAO) and DODAG Information Object (DIO) messages. The last two messages are used to set up routing structures and disseminate network routing parameters such as routes, timer values, RPL instance ID or DODAG ID. Therefore, even though DAO and DIO messages have link-local addresses as source and destination, they belong to a specific RPL Instance. A device sending these kind of messages can learn from message fields, such as the RPL instance ID or DODAG ID, to which VNet it belongs to. By definition, DIS messages are not bounded to any DODAG or RPL instance, since they are probing messages to solicit available RPL information from neighboring devices. Hence, these messages cannot be routed to a specific VNet without making certain assumptions.

VNet identification of DIS messages is dependent of the network configuration and is to be determined ultimately by the network operator. DIS messages can be assigned to be sent only to a previously specified default VNet or they can even be sent to all VNets known to the device. This highly hinders the ability to quickly join new VNets when the appropriate keying materials are available. Hence, devices could also send DIS messages to the default VNet only if no other VNet is available.

Once a device has IP connectivity in the default VNet, it can communicate with the network controller in order to receive the appropriate VNet parameters (policies) to securely use a protected VNet. Each VNet has its policies, that is, a set of rules, restrictions and allowed behaviors that define its behavior and functioning.

It can be distinguished between two kind of policies, those referred to link-layer security parameters and those that bound VNets to RPL and define how they interact.

After receiving such policies for a specific VNet other than the default one, a device can correctly send and receive message from it, entering its operational phase. Furthermore, during maintenance, the device could still communicate with the controller using the default VNet and an E2E security connection. It is worth noting that, devices that do not enable VNet logic, could still use the default VNet to acquire extra VNet policies but losing connectivity to the default VNet. The integration of non-VNet devices is facilitated by the usage of standard mechanisms and fields.

Link-layer security parameters based on the IEEE 802.15.4 protocol are considered, but it could be extended to other link-layers such as 802.11. The first configuration parameter is the security level that the VNet offers in the MAC sublayer. The valid values are specified and offer data authenticity and/or confidentiality for different key sizes. For example, the maximum level of security offered, is the one which provides data encryption and authenticity using AES-128 bits in CCM mode of operation. Another configuration parameter is the Key Identifier Mode, as it was explained previously, the usage of Mode 2 as default value can be envisaged.

Furthermore, the VNet has associated a key source value, which serves as a VNet identifier field. Last but not least, a VNet needs also to specify the key material to be used for secure operation. In our design this is the VNet-wide key. Alternatively, the VNET needs to specify which neighbouring devices are associated to which VNET so that after device authentication based on pairwise keys at L2, it can be verified whether the device is allowed to exchange information in the given VNET or not.

RPL-related parameters determine how VNets interact with the RPL protocol. A VNet has an RPL Instance ID as configuration parameter, which determines the RPL Instance that is associated with its traffic. Furthermore, it can also be specified the treatment to be given to RPL DAG Information Solicitation (DIS) messages. As explained earlier, DIS messages cannot be directly bounded to a specific VNet, hence a configuration parameter which determines if DIS messages are allowed in the VNet is convenient.

Furthermore there is another important parameter that affects VNets but is RPL specific, and that is the DODAG Identifier, which is advertised in the RPL setup process and is used in SLAAC as the network prefix to assign IPv6 addresses.

In a variant of the invention, it is also proposed a distributed mechanism to ensure QoS throughout the network, in such a way that the use of a VNet of the common network can be controlled and negative effects are restricted to certain VNet and/or a region of the network. The approach taken has focused on providing a scalable and lightweight approach that has as less state as possible and performs lightweight computations with few configuration parameters. The enforcement of the QoS mechanism is done locally on trusted devices or on a trusted part of the devices throughout the network. The trusted part of the devices can be the lowest layers (L2 and L3) if correctly isolated from the upper layers (e.g., by means of sandboxing techniques). Offending devices' effects are localized and confined in a network region, given that neighbouring devices detect violations of QoS policies and act accordingly.

The considered variant has to ensure that the different VNets share fairly the common network resources or and allow imposing limits to some of them, so that they cannot affect excessively the whole network. For example, the default VNet might only allow high data-rates during an initial commissioning phase or some VNets might need to be restricted in terms of bandwidth because of contractual conditions. Furthermore, the traffic considered is that with Variable Bit-Rate (VBR), which is typical in network traffic.

The traffic is classified and controlled based on its VNet ID, the policy to apply is distributed by the network operator and consists on a maximum data-rate and a maximum burst size in the VNet. The burst size is the maximum amount of traffic allowed in a single send that can violate the rate restriction momentarily. The traffic scheduling used is First-In First-Out (FIFO) and the traffic shaping is done discarding those packets which violate the policy. It is worth noting that powerful devices could also queue the offending packets for some time before discarding them, but this approach was taken for its simplicity. The dropped packet will just appear to be lost due to the constrained network's limitations.

Moreover, it can be considered a token bucket bandwidth control mechanism, which is to be applied as a VNet-specific policy and is locally enforced in each hop by devices which have this logic enabled. The token bucket mechanism is chosen because is simple and effective for traffic with burst patterns and VBR, it can be enforced with very few configuration parameters and has very small processing needs. In order to apply the token bucket principle to IEEE 802.15.4 traffic, we specify the bandwidth control mechanism as a VNet-specific QoS policy. The policy applies to, e.g., all data that is to be sent by the device (both generated and routed traffic). More elaborated policies are also feasible. Before sending a message, we check if it violates the token bucket policy (e.g. a token per each bit to be sent or a token per each frame). If the check is correct, the needed tokens are subtracted and the message is sent. Additionally, VNet policies can be enforced by the trusted/moderated layers of the device, in particular enforced at link-layer using VNet-wide keys. Hence, bandwidth control mechanism is considered to be placed at link-layer. This way, the control applies to all possible traffic of each VNet before it is sent to the common network. Nevertheless, bandwidth control mechanisms could be enforced in other layers such as RPL routing mechanisms since they are also bounded to specific VNets. But, we discarded it to gather all VNet specific logic at link-layer and because this way the complete size of the link-layer frame is already known. Token buckets within RPL would only be able to work with IPv6 message sizes, which do not take into account the overhead caused by the IEEE 802.15.4 frames and its security mechanisms.

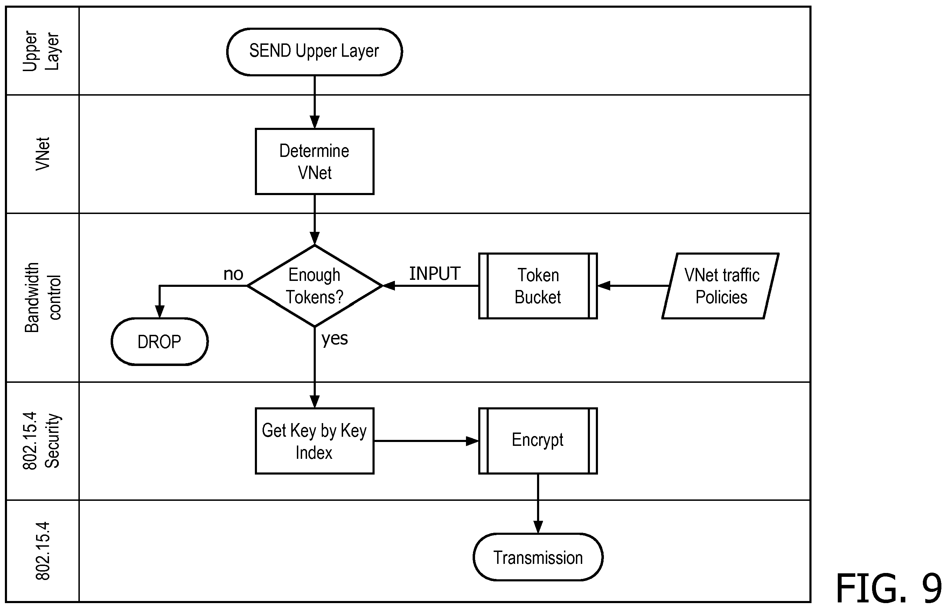

The logic of the proposed bandwidth control mechanism for VNets is depicted in Figure 9, where upper layer protocols trigger some frame to be sent. The VNet logic identifies the appropriate VNet, but before securing the frame and sending the frame, it checks if the bandwidth policy is correct (bandwidth control layer in Figure 9). In case the check is successful, i.e. there are enough tokens for such frame in the appropriate VNet, the message is then protected and sent. Otherwise, the message is dropped.

As discussed previously, other variants can be used for the design of 6LoWPAN VNets.

VNet-specific restrictions can be used as an umbrella term to gather the set of rules, restrictions and allowed behaviors applied to a specific VNet. These can ease network management and improve its behavior, e.g. improve network segmentation with restrictions that determine which devices are allowed into the VNet. They can be used to specify security parameters that are to be enforced for VNet traffic.

For instance, allow only encrypted traffic or a certain security level within the VNet. Furthermore, device compromise resilience can be improved with a blacklist of misbehaving devices. The implementation of VNet-specific restrictions is are enforced as VNet policies, which encapsulate them and can be implemented in different layers, for example as ACLs in link-layer, as RPL-specific rules or in IP layer. Even though it can enhance network management, checking all frames for policy correctness can be very inefficient depending on its implementation.

In the previously described embodiments, it has been focused on VNet restrictions applied on a per-device manner. This implies that a certain VNet is only accessible to those devices who are authorized to do so, for example street-lamps can access the "street-light VNet" while the traffic lights and parking sensors could not. On the contrary, we ruled out VNet access based on application policies. These are applied on a higher level and they restrict the access of user-level applications or protocols to different VNets. E.g., if a streetlamp has a light-control application and a luminosity data-collection application, the first one would be granted access to the street-light control VNet while the second one would be granted access to a data-collection VNet that only allows reporting data to a central server.

The difference between both policies is important, since it can greatly impact the suitability, complexity and efficiency of different mechanisms to enable them. Device policies are better suited to be implemented in lower layer protocols such as link-layer keys, routing, IP filters or QoS filters (level 3). They cover all protocol layers on top and can be effective as soon as possible, avoiding unnecessary processing and resource usage. Nevertheless, application policies are better suited for higher level mechanisms such as different application rights on the OS, virtual machine restrictions, containers, sandboxes, or other security architectures. Application restrictions cannot directly manage network segmentation or isolation by themselves, given that applications are not aware of network structure or logic. In a fully centralized approach, the network operator can apply fully centralized management methods to address this.

Nevertheless, in combination with other mechanisms it could allow for improved QoS by preventing applications from misbehaving. This can be achieved accessing device or network resources through a resource manager or an application sandbox.

Application control, like the aforementioned ones, can help the network to restrict how specific applications or protocols use different VNets. Their interoperability and efficiency highly depends on their implementation. For example, VNets in different routing structures could be linked to different application profiles. The main drawback is that RPL security mechanisms only grant protection for RPL-specific control traffic, and hence, other traffic such as application-data or even other ICMPv6 messages could be intercepted, forged or even injected into another VNet. Furthermore, the verification of the messages has to be done in upper layers, which forbids detecting invalid frames as soon as possible.

The application of policies in upper levels would require considerably more memory and complexity to enable ACLs or similar mechanisms. Pair-wise schemes provide higher security at a higher cost.

In the previous examples, the VNets were identified based on the key identifier. However, other options are also relevant, for example the PAN Identifier can be used. The IEEE 802.15.4 standard defines the Personal Area Network (PAN)-ID to be the identifier of the PAN on which the device is operating, it has a special value on devices that are not associated, which allows them to listen to all PAN-IDs. The usage of different PAN-ID entails that every VNet is specified as a new PAN by itself. That is, instead of having a 6LoWPAN divided in different logical sub-divisions, this solution forms multiple 6LoWPANs that overlap in some devices. Which is the specification of a multi-PAN environment according to the IEEE 802.15.4 standard.

In this case, a device would have to listen to messages from more than one PAN-ID when it is to support multiple VNets. It is possible to do so by doing an open reading of the IEEE 802.15.4 standard, acting in parallel in multiple PANs as opposed to a single macPANid variable. The device needs to filter unwanted VNets/PAN-IDs on software.

This method requires some extra software filtering effort and, sometimes, the capability to listen to multiple channels during normal operation, as if it was a constant channel scan when VNets happen to be in different channels. This could be avoided by forcing all VNets to be in the same channel for efficiency reasons.

The number of concurrent VNets is limited by the PAN-ID 16 bit field, which is also potentially used by neighboring networks. Hence, the creation of a new VNet requires ensuring that the new PAN does not conflict with neighboring PAN-IDs to avoid network conflicts, which might not be easy in large-scale deployments.

For instance, city-wide networks can span across large geographical areas, which might introduce such an identifier conflict with a higher probability given the higher number of different identifiers in use, potentially triggering a whole-network PAN-ID change in worst case scenarios.

It is to be noted that the present invention is not limited to 6LoWPANs but can be applied to other protocols stacks.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

The foregoing description details certain embodiments of the invention. It will be appreciated, however, that no matter how detailed the foregoing appears in text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

## Claims

1. A method of a communication node connected to a network comprising a plurality of further nodes, wherein the communication node comprises a logical communication stack, said communication stack comprising at least one virtual network entity for communicating with further nodes belonging to a virtual network, wherein the method comprises the virtual network entity identifying whether a first data packet belongs to said virtual network based on at least one of
- a cryptographic key used for the data packet;
- a cryptographic key identifier present in the first data packet;
- a Personal Area Network identifier present in the first data packet ; or
- the combination of a cryptographic key and a sender IP address used for the first data packet
wherein the virtual network entity is included at the MAC security sublayer and wherein the communication node further comprises at least one routing entity at layer 3 corresponding to the at least virtual network entity.

2. The method of any of the previous claims, wherein the first data packet is an incoming data packet, and wherein the method further comprises identifying a virtual network for a second data packet being an outgoing data packet based on a source address or a destination address used in the second data packet.

3. The method of any of the previous claims, wherein the cryptographic key is identified by a cryptographic key identifier present in the first data packet.

4. The method of any of the previous claims, wherein a first data packet is discarded if the virtual network to which said first data packet cannot be identified or does not correspond to the virtual network to which the communication node belongs to.

5. A communication node connected to a network comprising a plurality of further nodes, wherein the node comprises a logical communication stack, said communication stack comprising at least one virtual network entity for communicating with further nodes belonging to a virtual network, wherein the virtual network entity identifies whether a first data packet belongs to said virtual network based on at least one of
- a cryptographic key used for the data packet;
- a cryptographic key identifier present in the first data packet; or
- a Personal Area Network identifier present in the first data packet wherein the virtual network entity is included at the MAC security sublayer and wherein the communication node further comprises at least one routing entity at layer 3 corresponding to the at least virtual network entity.

6. The communication node of claim 5, wherein the first data packet is an incoming data packet, and wherein the virtual network entity is arranged for identifying a virtual network for a second data packet being an outgoing data packet based on at least one of a source address or a destination address used in the second data packet.

7. The communication node of claim 5, including at least two virtual network entities, and wherein each routing entity corresponding to each of the virtual network entities includes a Directed Acyclic Graph.

8. The communication node of any of claims 5 to 7, wherein the virtual network entity is arranged for identifying the virtual network to which the first data packet pertains based on a cryptographic key identifier present in the first data packet, said cryptographic key identifier identifying the cryptographic key.

9. The communication node of any of claims 5 to 8, wherein the virtual network entity is arranged for identifying the virtual network to which the first data packet pertains from the sender's IP address after verifying the first data packet based on a cryptographic key associated to the communication link at layer two with the node that sent the first data packet.

10. The communication node of claim 6, wherein the virtual network entity is arranged for discarding the first data packet if the virtual network to which said first data packet cannot be identified or does not correspond to the virtual network to which the communication node belongs to.

## Patentansprüche

1. Verfahren eines Kommunikationsknotens, der mit einem Netzwerk mit einer Vielzahl weiterer Knoten verbunden ist, wobei der Kommunikationsknoten einen logischen Kommunikationsstapel umfasst, wobei der Kommunikationsstapel mindestens eine virtuelle Netzwerkeinheit zur Kommunikation mit weiteren, zu einem virtuellen Netzwerk gehörenden Knoten umfasst, wobei das Verfahren beinhaltet, dass die virtuelle Netzwerkeinheit aufgrund von zumindest einem/einer der folgenden identifiziert, ob ein erstes Datenpaket zu dem virtuellen Netzwerk gehört:
- einem für das Datenpaket verwendeten kryptographischen Schlüssel;
- einer sich in dem ersten Datenpaket befindenden Kennung des kryptographischen Schlüssels;
- einer sich in dem ersten Datenpaket befindenden Kennung des Personal Area Network; oder
- der Kombination aus einem kryptographischen Schlüssel und einer für das erste Datenpaket verwendeten IP-Adresse des Absenders,
wobei die virtuelle Netzwerkeinheit in dem MAC-Security-Sublayer enthalten ist, und wobei der Kommunikationsknoten weiterhin mindestens eine Routingeinheit an Layer 3 entsprechend der mindestens einen virtuellen Netzwerkeinheit umfasst.

2. Verfahren nach Anspruch 1, wobei das erste Datenpaket ein ankommendes Datenpaket ist,
und wobei das Verfahren weiterhin beinhaltet, dass ein virtuelles Netzwerk für ein zweites Datenpaket, das ein ausgehendes Datenpaket ist, aufgrund einer Ursprungsadresse oder einer in dem zweiten Datenpaket verwendeten Zieladresse identifiziert wird.

3. Verfahren nach einem der vorangegangenen Ansprüche, wobei der kryptographische Schlüssel durch eine sich in dem ersten Datenpaket befindende Kennung des kryptographischen Schlüssels identifiziert wird.

4. Verfahren nach einem der vorangegangenen Ansprüche, wobei ein erstes Datenpaket verworfen wird, wenn das virtuelle Netzwerk, zu dem das erste Datenpaket gehört, nicht identifiziert werden kann oder dem virtuellen Netwerk, zu dem der Kommunikationsknoten gehört, nicht entspricht.

5. Kommunikationsknoten, der mit einem Netzwerk mit einer Vielzahl weiterer Knoten verbunden ist, wobei der Knoten einen logischen Kommunikationsstapel umfasst, wobei der Kommunikationsstapel mindestens eine virtuelle Netzwerkeinheit zur Kommunikation mit weiteren, zu einem virtuellen Netzwerk gehörenden Knoten umfasst, wobei die virtuelle Netzwerkeinheit aufgrund von zumindest einem/einer der folgenden identifiziert, ob ein erstes Datenpaket zu dem virtuellen Netzwerk gehört:
- einem für das Datenpaket verwendeten kryptographischen Schlüssel;
- einer sich in dem ersten Datenpaket befindenden Kennung des kryptographischen Schlüssels; oder
- einer sich in dem ersten Datenpaket befindenden Kennung des Personal Area Network,
wobei die virtuelle Netzwerkeinheit in dem MAC-Security-Sublayer enthalten ist, und wobei der Kommunikationsknoten weiterhin mindestens eine Routingeinheit an Layer 3 entsprechend der mindestens einen virtuellen Netzwerkeinheit umfasst.

6. Kommunikationsknoten nach Anspruch 5, wobei das erste Datenpaket ein ankommendes Datenpaket ist, und wobei die virtuelle Netzwerkeinheit so eingerichtet ist, dass sie ein virtuelles Netzwerk für ein zweites Datenpaket, bei dem es sich um ein ausgehendes Datenpaket handelt, aufgrund von zumindest einer Ursprungsadresse oder einer in dem zweiten Datenpaket verwendeten Zieladresse identifiziert.

7. Kommunikationsknoten nach Anspruch 5, mit mindestens zwei virtuellen Netzwerkeinheiten, wobei jede, jeder der virtuellen Netzwerkeinheiten entsprechende Routingeinheit einen gerichteten azyklischen Graph enthält.

8. Kommunikationsknoten nach einem der Ansprüche 5 bis 7, wobei die virtuelle Netzwerkeinheit so eingerichtet ist, dass sie das virtuelle Netzwerk, zu dem das erste Datenpaket gehört, aufgrund einer sich in dem ersten Datenpaket befindenden Kennung des kryptographischen Schlüssels identifiziert, wobei die Kennung des kryptographischen Schlüssels den kryptographischen Schlüssel identifiziert.

9. Kommunikationsknoten nach einem der Ansprüche 5 bis 8, wobei die virtuelle Netzwerkeinheit so eingerichtet ist, dass sie das virtuelle Netzwerk, zu dem das erste Datenpaket gehört, anhand der IP-Adresse des Absenders nach Verifizieren des ersten Datenpakets aufgrund eines kryptographischen Schlüssels identifiziert, welcher der Kommunikationsverbindung an Layer Zwei mit dem Knoten, der das ersten Datenpaket übermittelte, zugeordnet ist.

10. Kommunikationsknoten nach Anspruch 6, wobei die virtuelle Netzwerkeinheit so eingerichtet ist, dass sie das erste Datenpaket verwirft, wenn das virtuelle Netzwerk, zu dem das erste Datenpaket gehört, nicht identifiziert werden kann oder dem virtuellen Netzwerk, zu dem der Kommunikationsknoten gehört, nicht entspricht.

## Revendications

1. Procédé d'un noeud de communication connecté à un réseau comprenant une pluralité d'autres noeuds, dans lequel le noeud de communication comprend une pile de communication logique, ladite pile de communication comprenant au moins une entité de réseau virtuel pour communiquer avec d'autres noeuds appartenant à un réseau virtuel,
dans lequel le procédé comprend l'entité de réseau virtuel identifiant si un premier paquet de données appartient ou non audit réseau virtuel sur la base d'au moins l'un des éléments suivants :
- une clé cryptographique utilisée pour le paquet de données ;
- un identifiant de clé cryptographique présent dans le premier paquet de données ;
- un identifiant de réseau local personnel présent dans le premier paquet de données ; ou
- la combinaison d'une clé cryptographique et d'une adresse IP d'expéditeur utilisée pour le premier paquet de données,
dans lequel l'entité de réseau virtuel est incluse dans la sous-couche de sécurité MAC et dans lequel le noeud de communication comprend en outre au moins une entité de routage dans la couche 3 correspondant à l'au moins une entité de réseau virtuel.

2. Procédé selon l'une quelconque des revendications précédentes, dans lequel le premier paquet de données est un paquet de données entrant
et dans lequel le procédé comprend en outre l'identification d'un réseau virtuel pour un second paquet de données qui est un paquet de données sortant sur la base d'une adresse source ou d'une adresse destination utilisée dans le second paquet de données.

3. Procédé selon l'une quelconque des revendications précédentes, dans lequel la clé cryptographique est identifiée par un identifiant de clé cryptographique présent dans le premier paquet de données.

4. Procédé selon l'une quelconque des revendications précédentes, dans lequel un premier paquet de données est rejeté si le réseau virtuel auquel ledit premier paquet de données ne peut être identifié ou ne correspond pas au réseau virtuel auquel le noeud de communication appartient.

5. Noeud de communication connecté à un réseau comprenant une pluralité d'autres noeuds, dans lequel le noeud comprend une pile de communication logique, ladite pile de communication comprenant au moins une entité de réseau virtuel pour communiquer avec d'autres noeuds appartenant à un réseau virtuel, dans lequel l'entité de réseau virtuel identifie si un premier paquet de données appartient ou non audit réseau virtuel sur la base d'au moins l'un des éléments suivants :
- une clé cryptographique utilisée pour le paquet de données ;
- un identifiant de clé cryptographique présent dans le premier paquet de données ; ou
- un identifiant de réseau local personnel présent dans le premier paquet de données, dans lequel l'entité de réseau virtuel est incluse dans la sous-couche de sécurité MAC et dans lequel le noeud de communication comprend en outre au moins une entité de routage dans la couche 3 correspondant à la au moins une entité de réseau virtuel.

6. Noeud de communication selon la revendication 5, dans lequel le premier paquet de données est un paquet de données entrant et dans lequel l'entité de réseau virtuel est agencée pour identifier un réseau virtuel pour un second paquet de données qui est un paquet de données sortant sur la base d'au moins l'une d'une adresse source ou d'une adresse destination utilisée dans le second paquet de données.

7. Noeud de communication selon la revendication 5, incluant au moins deux entités de réseau virtuel et dans lequel chaque entité de routage correspondant à chacune des entités de réseau virtuel inclut un graphe acyclique orienté.

8. Noeud de communication selon l'une quelconque des revendications 5 à 7, dans lequel l'entité de réseau virtuel est agencée pour identifier le réseau virtuel auquel le premier paquet de données appartient sur la base d'un identifiant de clé cryptographique présent dans le premier paquet de données, ledit identifiant de clé cryptographique identifiant la clé cryptographique.

9. Noeud de communication selon l'une quelconque des revendications 5 à 8, dans lequel l'entité de réseau virtuel est agencée pour identifier le réseau virtuel auquel le premier paquet de données appartient à partir de l'adresse IP de l'expéditeur après vérification du premier paquet de données sur la base d'une clé cryptographique associée à la liaison de communication dans la couche deux avec le noeud qui a envoyé le premier paquet de données.

10. Noeud de communication selon la revendication 6, dans lequel l'entité de réseau virtuel est agencée pour rejeter le premier paquet de données si le réseau virtuel auquel ledit premier paquet de données ne peut être identifié ou ne correspond pas au réseau virtuel auquel le noeud de communication appartient.
